# EUROPÄISCHE PATENTSCHRIFT

(11) **EP 1 137 816 B1**
(45) Veröffentlichungstag und Bekanntmachung des Hinweises auf die Patenterteilung: **24.07.2002**
(21) Anmeldenummer: 99955955.2
(22) Anmeldetag: 04.11.1999
(51) Int. Cl.: C21B 13/10

(54) **VERFAHREN ZUM HERSTELLEN VON DIREKT REDUZIERTEM, ENTSCHWEFELTEM EISEN**
METHOD FOR PRODUCING DIRECTLY REDUCED, DESULFURIZED IRON
PROCEDE DE PRODUCTION DE FER DIRECTEMENT REDUIT DESULFURE

(30) Priorität: 05.11.1998 LU 90314
(43) Veröffentlichungstag der Anmeldung: 04.10.2001
(73) Patentinhaber: PAUL WURTH S.A., 1122 Luxembourg (LU)
(72) Erfinder: ROTH, Jean-Luc, F-57100 Thionville (FR); HANSMANN, Thomas, D-54296 Trier (DE); FRIEDEN, Romain, L-6235 Beidweiler (LU); SOLVI, Marc, L-3961 Ehlange s/ Mess (LU)
(74) Vertreter: Kihn, Pierre Emile Joseph
(86) Internationale Anmeldenummer: EP9908440
(87) Internationale Veröffentlichungsnummer: WO0028095

(56) Entgegenhaltungen:
- BE-A- 1 008 579
- DE-B- 1 225 673
- US-A- 2 089 782
- US-A- 2 792 298
- US-A- 3 756 804

## Beschreibung

Die vorliegende Erfindung betrifft ein Verfahren zum Herstellen von direkt reduziertem, entschwefeltem Eisen.

Die Herstellung von direkt reduziertem Eisen geschieht in einem Direktreduktionsverfahren durch Reduktion von Eisenoxid mit festen oder gasförmigen Reduktionsmitteln. Als festes Reduktionsmittel dient dabei zum Beispiel Kohle, die bei höheren Temperaturen mit Kohlendioxid reagiert und das Reduktionsgas CO bildet. Da die Kohle relativ viel Schwefel enthält und auch das eingesetzte Eisenerz oft auch dieses Element enthält, weisen sowohl das erzeugte Eisen sowie die Abgase einen zu hohen Schwefelgehalt. Eine nachträgliche Entschweflung der Abgase und des direkt reduzierten Eisens ist kostspielig.

Aus der Deutschen Auslegeschrift DE 1 225 673 ist ein Verfahren zur trocknen Reduktion von Eisenerz bekannt wobei Eisenerz und Kohle in einen Etagenofen eingebracht werden, die Kohle mit eingeblasenen Sauerstoff reagiert wobei Kohlenmonoxid entsteht und das Erz nach und nach durch dieses Kohlenmonoxid reduziert wird. Es wird auch erwähnt auf jeder Etage frisches Erz, gegebenenfalls mit Kohle, Kalk od. dgl. gemischt, beizugeben, wenn die Reaktion es verlangt.

Das US Patent US 3,756,804 beschreibt ein ähnliches Verfahren wobei eisenhaltige Filterstäube und Reduktionsmittel in einem Etagenofen bei hoher Temperatur reagieren und die im Filterstaub enthaltenen Oxide reduziert werden. Es wird in diesem Dokument erwähnt, daß der Schwefelgehalt durch beimischen von Kalkstein unter die Filterstäube und das Reduktionsmittel gesenkt werden kann. Weiterhin wird angegeben, daß dies nicht nötig sei da die Bildung von Schwefeldioxid und -trioxid wegen der reduzierenden Atmosphäre innerhalb des Ofens nicht zu befürchten sei Aufgabe der vorliegenden Erfindung ist es, ein Verfahren zum Herstellen von direkt reduziertemEisen vorzuschlagen, wobei die Abgase innerhalb des Etagenofens entschwefelt werden.

Diese Aufgabe wird erfindungsgemäß gelöst durch ein Verfahren zum Herstellen von direkt reduziertem, entschwefeltem Eisen in einem Etagenofen, der zwei übereinanderliegende Zonen mit jeweils mehreren Etagen aufweist, wobei in einer ersten Zone des Etagenofens Eisenerz mit einen Kohlenstoffträger bei einer Temperatur zwischen 800°C und 1100°C reagiert und zu metallischem Eisen wird und die Gase mit Entschwefelungsmitteln entschwefelt werden, wobei das direkt reduzierte Eisen aus dem Etagenofen ausgetragen wird und die entschwefelten Gase in die zweite Zone geleitet werden und dort das Eisenerz bis auf 600°C bis 800°C vorwärmen.

Durch dieses Verfahren wird der Schwefelgehalt der Gase innerhalb des Etagenofens gesenkt. Bei der Direktreduktion von Eisenerz wird Schwefel bei der Vergasung des Reduktionsmittels - z.B. Kohle - freigesetzt. Eine geringere Menge von Schwefel kann auch bei der Reduktion vom Eisenerz zu Eisen freigesetzt werden. Es wurde festgestellt, daß im Gegensatz zu den Aussagen aus dem US Patent 3,756,804 der Schwefel im Etagenofen oxidiert und als Schwefeldioxid und -trioxid mit den Gasen aus dem Etagenofen ausgetragen wird. Die Atmosphäre im Etagenofen ist trotz eines hohen CO-Gehaltes bei den herrschenden Bedingungen gegenüber den Eisenoxid und dem Schwefel eigentlich nicht reduzierend. Damit die Atmosphäre im Etagenofen gegenüber den genannten Stoffen reduzierend wirkt müßte ein Verhältnis CO/CO2 von mindestens 75/25 vorliegen. Dies ist jedoch nicht der Fall, wenn Brenner benutzt werden um den Etagenofen aufzuheitzen.

Auch wenn diese Brenner mit einem großen Überschuß an Brennstoff d.h. reduzierend, befeuert werden, hat es sich gezeigt ist es unmöglich das obige Verhältnis zwischen CO/CO2 in der Atmosphäre innerhalb des Etagenofens zu erreichen.

Es ist deshalb wichtig den Schwefelgehalt der Gase im Etagenofen zu senken um ein direkt reduziertes Eisen mit niedrigerem Schwefelgehalt zu erzeugen und eine kostspielige nachbehandlung der Abagse zu vermeiden.

Dieser Schwefel wird in diesem Verfahren innerhalb der ersten Zone gebunden und kann deshalb nicht mehr bzw. in geringerem Maße mit dem Eisenerz bzw. mit dem gebildeten Eisen reagieren. Das nach diesem Verfahren hergestellte, direkt reduzierte Eisen weist deshalb einen deutlich niedrigeren Schwefelgehalt auf.

Die Entschwefelungsmittel werden vorteilhaft in die aufsteigenden Gase des Etagenofens eingeblasen oder gedüst. Durch eine chemische Reaktion des Schwefels der im Etagenofen aufsteigenden Gase mit den eingedüsten Entschwefelungsmitteln wird der Schwefel unter Form von Kalzium- und/oder Magnesiumsulfate, -sulfite, -sulfide u.ä. gebunden. Diese Verbindungen entstehen bevorzugt an der Oberfläche der Entschwefelungsmittel. Die Enstchwefelungsmittel werden anschließend zu einem großen Teil mit den Gasen aus dem Etagenofen ausgetragen und können leicht in einem Abscheider wie z. B. einem Zyklon von den Abgasen getrennt werden, ohne daß eine aufwendige Entschwefelungsanlage für die Gase nötigt wäre.

Die Entschwefelungsmittel die nicht mit den Abgasen aus dem Ofen ausgetragen werden, können durch magnetische Trennung oder ähnliche Verfahren problemlos von dem hergestellten Eisen nach Austrag aus dem Ofen getrennt werden.

Die Entschwefelung der Gase geschieht vorteilhaft zu einem großen Teil innerhalb der ersten Zone.

Die Entschwefelungsmittel enthalten z.B. Kalk (CaO), Kalkstein (CaCO₃) und/oder Magnesit (MgO).

Ein Vorteil dieser Mittel besteht darin, daß der Teil der nicht mit den Abgasen aus dem Etagenofen ausgetragen wird, problemlos mit dem direkt reduzierten Eisen eingeschmolzen werden kann, da solche Entschwefelungsmittel die Eigenschaften der Schlacke positiv beeinflussen.

Der Etagenofen weist eine erste Zone und eine zweite Zone auf, die jeweils mehrere Etagen umfassen. Die zweite Zone liegt vorteilhaft über der ersten Zone und die Gase steigen von der ersten Zone in die zweite während die festen Stoffe von der zweiten Zone nach und nach in die erste Zone transferiert werden.

Die Feststoffe d.h. das Eisenerz und das Reduktionsmittel können getrennt oder gemeinsam in den Etagenofen eingebracht werden. Gemäß einer bevorzugten Ausführung wird zuerst das Eisenerz auf die oberste Etage des Etagenofens in die zweite Zone aufgetragen. Dort wird es durch Rechen die über die Etagen ragen, umgewälzt und nach und nach auf die darunterliegenden Etagen transferiert. Auf einer Etage weiter unten im Etagenofen, vorzugsweise im unteren Teil der zweiten Zone, wird dann das Reduktionsmittel aufgetragen und unter das vorgewärmte Eisenerz gemischt. Durch das dauernde Umwälzen wird ein Zusammenbacken des Reduktionsmittels und des Erzes verhindert. Bei den Reduktionsmitteln handelt es sich z.B. um Steinkohle, Braunkohle, Koks, usw.

Gemäß einer bevorzugten Ausführung wird in der zweiten Zone ein Teil der Entschwefelungsmittel sowie ein Reduktionsmittel unter das Eisenerz gemischt.

Dieser Teil der Entschwefelungsmittel kann zusammen mit dem Eisenerz, und/oder mit dem Kohlenstoffträger in den Etagenofen eingebracht werden. Er kann aber auch separat in den Etagenofen eingebracht werden.

Je nach Schwefelgehalt des Reduktionsmittels kann man die Entschwefelungsmittel entweder an einer Stelle in den Etagenofen eingeben oder aber aufteilen und an verschiedenen Stellen auftragen. In dem Fall kann man auch unterschiedliche Korngrößen verwenden. Es hat sich als vorteilhaft erwiesen in der zweiten Zone grobkörniges Entschwefelungsmittel und in der ersten Zone pulverförmiges Entschwefelungsmittel aufzugeben. Je nach Granulometrie der Partikel werden diese Partikel zusammen mit den Gasen oder mit den Feststoffen aus dem Etagenofen ausgetragen. Pulverförmiges Entschwefelungsmittel wird vorteilhaft direkt in den Gasstrom in der ersten Zone eingebracht wodurch die Entschwefelung wirksamer ist. Die mit Schwefel angereicherten pulverförmigen Entschwefelungsmittel werden zu einem großen Teil mit den Gasen aus dem Etagenofen ausgetragen.

Die Feststoffe d.h. das gebildete Eisen, die Rückstände des Kohlenstoffträgers und die Entschwefelungsmittel werden aus dem Etagenofen ausgetragen und anschließend eingeschmolzen. Dabei bilden die Entschwefelungsmittel zusammen mit der Gangart des Erzes eine Schlacke und der gebundene Schwefel wird zusammen mit der Schlacke entsorgt.

Man kann aber auch die Rückstände des Kohlenstoffträgers und die Entschwefelungsmittel vom Eisen trennen, bevor das Eisen eingeschmolzen wird. Dies kann z. B. durch magnetische Trennung erfolgen.

Durch gezieltes Zugeben von Reduktionsmitteln in den unteren Etagen des Etagenofens können die Reduktionsgase im Ofen auf eine optimale Konzentration eingestellt werden und somit ein besserer Metallisierungsgrad erreicht werden. Auf den untersten Etagen des Etagenofens kann zusätzlich ein gasförmiges Reduktionsmittel eingeblasen werden. Hierdurch wird eine vollständigere Reduzierung des Erzes erreicht.

Alle aufsteigenden Gase, inklusive der flüchtigen Bestandteile der Reduktionsmittel, können im oberen Teil des Ofens d.h. in der zweiten Zone nachverbrannt werden und die Restwärme der Gase innerhalb des Ofens können hierdurch optimal genutzt werden. Es wird demnach ein guter thermischer Wirkungsgrad erreicht, denn die Energieausbeutung ist besser.

Zu einer weiteren Erhöhung der Produktivität kann der Etagenofen unter einem bestimmten Überdruck gefahren werden.

Gemäß einer bevorzugten Ausführung wird das Erz in den obersten Etagen des Ofens durch die heißen Gase im Ofen und im Kontakt mit den Etagen getrocknet und vorgewärmt, bevor es mit dem Reduktionsmittel in Kontakt kommt. Das Erz wird vorzugsweise auf eine Temperatur von mindestens 400°C, vorzugsweise auf mindestens 600°C bis 700°C, erhitzt, bevor das feste Reduktionsmittel zugesetzt wird.

Sauerstoffhaltige Gase können gezielt auf der Etage eingeblasen werden wo der Wärmebedarf durch Verbrennen der überschüssigen Prozeßgase abgedeckt werden muß, z.B. oberhalb der Etage, wo die festen Reduktionsmittel eingeführt werden.

Dabei ist es vorteilhaft, sauerstoffhaltige Gase zu verwenden, die eine Temperatur von mindestens 350°C haben.

Zusätzlich können eine oder mehrere Etagen im Ofen, die unterhalb der Etage liegen, auf die die festen Reduktionsmittel eingebracht werden, mittels Brenner aufgeheizt werden.

Im folgenden wird nun eine Ausgestaltung der Erfindung anhand der beiliegenden Figuren beschrieben. Es zeigen:

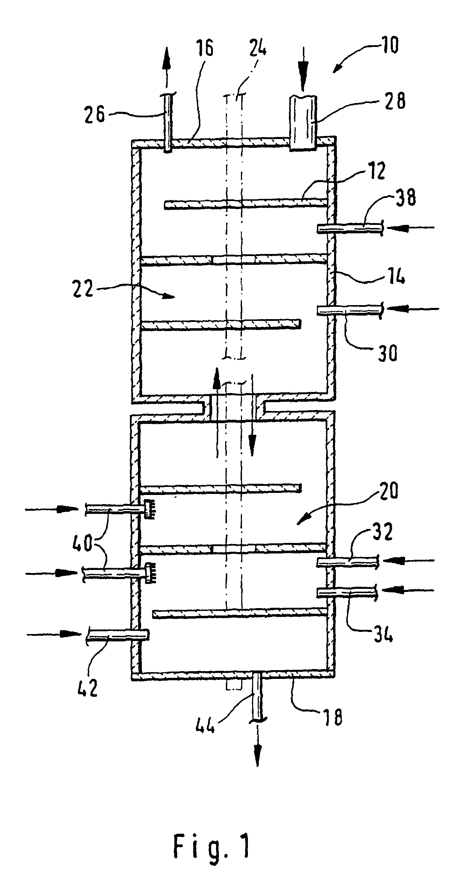

Fig.1: einen Schnitt durch einen Etagenofen zur Herstellung von direkt reduziertem, entschwefeltem Eisen,

Die Fig. 1 zeigt einen Schnitt durch einen Etagenofen 10, der mehrere übereinander liegende Etagen 12 aufweist. Diese freitragenden Etagen 12, sowie der Mantel 14, Deckel 16 und der Boden 18 des Ofens sind aus feuerfestem Material.

Der Etagenofen 10 ist in zwei übereinanderliegenden Zonen aufgeteilt, eine erste Zone 20 und in eine zweite Zone 22

Im Deckel 16 des Ofens 10 ist ein Abzug 26 vorgesehen, durch den die Gase aus dem Ofen evakuiert werden können und eine Öffnung 28, durch die das Erz auf die oberste Etage aufgetragen werden kann.

In der Mitte des Ofens 10 ist eine Welle 24 angebracht, an der Rechen befestigt sind, die über die jeweiligen Etagen ragen.

Die Rechen sind so ausgelegt, daß sie das Material auf einer Etage von innen nach außen und dann auf der darunterliegenden Etage von außen nach innen wälzen, um so das Material von oben nach unten durch den Ofen zu transportieren. Die Welle 24 und die Rechen sind luftgekühlt und an den Rechen sind Öffnungen vorgesehen, durch die die Luft in das Innere des Ofens strömen kann und dort zur Nachverbrennung genutzt wird.

Nachdem das Erz auf die erste Etage aufgebracht ist, wird es von den Rechen umgewälzt und zum Rand der Etage befördert, von wo es durch mehrere hierfür vorgesehene Öffnungen auf die darunterliegende Etage fällt. Von dort wird das Erz zur Mitte der Etage befördert und fällt dann auf die darunterliegende Etage. Während dieser Zeit wird das Erz durch den Kontakt mit der Etage und den aufsteigenden warmen Gasen getrocknet und auf ungefähr 600°C erhitzt.

In den Seitenwänden des Etagenofens 10 sind Einlaßöffnungen 30, 32, 34, angebracht, durch die feste Stoffe in den Ofen eingetragen werden. Bei diesen festen Stoffen handelt es sich einerseits um Kohlenstoffträger, wie z.B. um Braunkohlekoks, Petrolkoks, Hochofenstaub, Kohle o.ä. und anderseits um Entschwefelungsmittel wie Kalk (CaO), Kalkstein (CaCO₃) und/oder Magnesit (MgO).

Der Kohlenstoffträger wird durch die Öffnungen 30, 34 in die beiden Zonen 20, 22 auf eine Etage eingebracht und dort durch die Rechen 22 mit dem erhitzten Erz vermischt. Durch die hohe Temperatur wird die Kohle vergast und es entsteht Kohlenmonoxid wodurch das im Erz enthaltene Eisenoxid während des Transportes durch den Etagenofen 10 nach und nach zu metallischem Eisen reduziert wird.

Die Entschwefelungsmittel werden an mehreren Stellen in den Etagenofen eingebracht. Grobkörniges Entschwefelungsmittel wird zusammen mit dem Eisenerz durch die Öffnung 28 und/oder zusammen mit Kohlenstoffträger durch die Öffnungen 30 in den Etagenofen eingebracht.

Zusätzlich wird in der ersten Zone 20 durch die Öffnung 32 pulverförmiges Entschwefelungsmittel in die aufsteigenden Gase eingeblasen.

Bei diesem Verfahren wird Schwefel in zwei Etappen freigesetzt. Bis ungefähr 600°C wird zuerst der "mineralische" Schwefel der in Form von CaS0₄ und FeS₂ im Erz bzw. in dem Kohlenstoffträger vorliegt unter Form von H2S freigesetzt. Ab einer Temperatur von ungefähr 800°C wird dann der Schwefel der im Kohlenstoffträger unter "organischer" Form vorhanden ist freigesetzt. Unter den Bedingungen die im Etagenofen 10 vorherrschen reagiert dieser Schwefel bevorzugt mit den Entschwefelungsmitteln und kann dadurch nicht mit dem Eisenerz und Eisen reagieren. Die Gase werden demnach entschwefelt und das hergestellte Eisen enthält weniger Schwefel als bei konventionellen Verfahren.

In der Seitenwand sind Düsen 38 zum Einblasen von heißen (350°C bis 500°C) sauerstoffhaltigen Gasen vorgesehen, durch die man Luft oder ein anderes sauerstoffhaltiges Gas in den Ofen 10 eingeben kann. Durch die hohen Temperaturen und durch die Gegenwart von Sauerstoff verbrennt ein Teil des Kohlenstoffs zu Kohlendioxid, der wiederum mit dem im Überschuß vorhandenen Kohlenstoff reagiert und zu Kohlenmonoxid umgewandelt wird. Das Kohlenmonoxid reduziert schließlich das Eisenoxid zu metallischem Eisen. Da diese Reaktion überwiegend endotherm ist, ist es sinnvoll, im unteren Teil des Ofens Brenner 40 anzubringen, die eine gleichbleibend hohe Temperatur in den untersten Etagen des Ofens sicherstellen. Hier können Gas- oder Kohlenstaubbrenner eingesetzt werden.

Diese Brenner können zur Vorheizung und/oder zum Zusatzheizen mit Gas oder Kohlenstaub mit Luft befeuert werden. Durch das Mengenverhältnis zwischen Sauerstoff und Brennmaterial kann ein zusätzliches Reduktionsgas erzeugt werden oder bei Luftüberschuß wird ein Nachverbrennen der Prozeßgase erreicht. Im Falle einer Kohlenstaubfeuerung kann im Brenner ein Überschuß an Kohlenmonoxid erzeugt werden. Bei außenliegenden Brennkammern kann vermieden werden, daß die Asche der verbrannten Kohle in den Ofen gelangt und sich mit dem direkt reduzierten Eisen vermischt. Durch die Erzeugung von Kohlenmonoxid wird der Verbrauch an Kohlenstoffträger im Ofen 10 reduziert und somit auch der Aschegehalt im fertigen Produkt.

In der letzten oder in den beiden letzten Etagen ist die Zugabe eines gasförmigen Reduktionsmittels, z.B. Kohlenmonoxid oder Wasserstoff durch spezielle Düsen 42, vorgesehen. In dieser sauerstofffreien Atmosphäre kann die Reduktion des Erzes vervollständigt werden.

Anschließend wird das direkt reduzierte Eisen durch den Auslaß 44 im Boden 18 des Ofens 10 zusammen mit der Asche der Reduktionsmittel ausgetragen.

Durch die kontrollierte Eingabe von festen und gasförmigen Reduktionsmitteln, von sauerstoffhaltigen Gasen und von Entschwefelungsmitteln an verschiedenen Stellen des Etagenofens 10 ist es möglich, die Reduktion des Erzes genau zu kontrollieren und das Verfahren unter optimalen Bedingungen durchzuführen.

## Patentansprüche

1. Verfahren zum Herstellen von direkt reduziertem, entschwefeltem Eisen in einem Etagenofen, der zwei übereinanderliegende Zonen mit jeweils mehreren Etagen aufweist, wobei in einer ersten Zone des Etagenofens Eisenerz mit einem Reduktionsmittel bei einer Temperatur zwischen 800°C und 1100°C reagiert und zu metallischem Eisen wird und die Gase mit Entschwefelungsmitteln entschwefelt werden, wobei das direkt reduzierte Eisen aus dem Etagenofen ausgetragen wird und die entschwefelten Gase in die zweite Zone geleitet werden und dort das Eisenerz bis auf 600°C bis 800°C vorwärmen.

2. Verfahren nach Anspruch 1 **dadurch gekennzeichnet, daß** die Entschwefelungsmittel Kalk, Kalkstein und/oder Magnesit enthalten.

3. Verfahren nach einem der vorhergehenden Ansprüche **dadurch gekennzeichnet, daß** das Eisenerz in die zweite Zone aufgetragen wird und nach und nach in die erste Zone transferiert wird.

4. Verfahren nach Anspruch 3 **dadurch gekennzeichnet, daß** in der zweiten Zone Entschwefeiungsmittel sowie ein Reduktionsmittel unter das Eisenerz gemischt wird.

5. Verfahren nach Anspruch 3 **dadurch gekennzeichnet, daß** in der zweiten Zone ein Teil der Entschwefelungsmittel sowie ein Kohlenstoffträger unter das Eisenerz gemischt wird und der restliche Teil der Entschwefelungsmittel in die erste Zone eingebracht werden.

6. Verfahren nach Anspruch 5 **dadurch gekennzeichnet, daß** Entschwefelungsmittel mit unterschiedlicher Granulometrie verwendet werden.

7. Verfahren nach Anspruch 5 oder 6 **dadurch gekennzeichnet, daß** grobkörniges Entschwefelungsmittel in die zweite Zone und pulverförmiges Entschwefelungsmittel in die erste Zone eingedüst wird.

8. Verfahren nach einem der vorhergehenden Ansprüche **dadurch gekennzeichnet, daß** das Erz in der zweiten Zone des Etagenofens getrocknet wird und anschließend auf eine Temperatur von mindestens 400°C, vorzugsweise auf mindestens 600°C, erhitzt wird, bevor das feste Reduktionsmittel zugesetzt wird.

9. Verfahren nach einem der vorhergehenden Ansprüche **dadurch gekennzeichnet, daß** sauerstoffhaltige Gase in die erste Zone eingeblasen werden.

10. Verfahren nach einem der vorhergehenden Ansprüche **dadurch gekennzeichnet, daß** auf den untersten Etagen des Etagenofens feste und/oder gasförmige Reduktionsmittel eingebracht werden.

11. Verfahren nach einem der vorhergehenden Ansprüche **dadurch gekennzeichnet, daß** eine oder mehrere Etagen im Ofen, mittels Brenner aufgeheizt werden.

12. Verfahren nach einem der vorhergehenden Ansprüche **dadurch gekennzeichnet, daß** das Verfahren unter Überdruck ausgeführt wird.

## Claims

1. Process for production of directly reduced, desulphurised iron in a multiple-hearth furnace with two zones one above the other, each with several hearths, iron ore reacting with a reducing agent at a temperature between 800°C and 1100°C and becoming metallic iron and the gases being desulphurised with desulphurising agents in a first zone of the multiple-hearth furnace, the directly reduced iron being discharged from the multiple-hearth furnace and the desulphurised gases conducted into the second zone and preheating the iron ore there to between 600°C and 800°C.

2. Process according to claim 1, **characterised in that** the desulphurising agents contain lime, limestone and/or magnesite.

3. Process according to one of the preceding claims, **characterised in that** the iron ore is fed into the second zone and gradually transferred into the first zone.

4. Process according to claim 3, **characterised in that** desulphurising agents and a reducing agent are mixed with the iron ore in the second zone.

5. Process according to claim 3, **characterised in that** some of the desulphurising agents and a carbon carrier are mixed with the iron ore in the second zone and the remainder of the desulphurising agents is introduced into the first zone.

6. Process according to claim 5, **characterised in that** desulphurising agents with different granulometry are used.

7. Process according to claim 5 or 6, **characterised in that** coarse-grained desulphurising agents are introduced into the second zone and powdered desulphurising agents into the first zone.

8. Process according to one of the preceding claims, **characterised in that** the ore is dried in the second zone of the multiple-hearth furnace and subsequently heated to a temperature of at least 400°C, preferably to at least 600°C, before the solid reducing agent is added.

9. Process according to one of the preceding claims, **characterised in that** gases containing oxygen are injected into the first zone.

10. Process according to one of the preceding claims, **characterised in that** solid and/or gaseous reducing agents are introduced into the bottom hearths of the multiple-hearth furnace.

11. Process according to one of the preceding claims, **characterised in that** one or more hearths in the furnace are heated by burners.

12. Process according to one of the preceding claims, **characterised in that** the process takes place under overpressure.

## Revendications

1. Procédé de production de fer directement réduit désulfuré dans un four à étages comprenant deux zones superposées comportant chacune plusieurs étages, une première zone du four à étages étant le lieu où du minerai de fer réagit avec un agent réducteur à une température comprise entre 800°C et 1100°C et se transforme en fer métallique, et où les gaz sont désulfurés à l'aide des agents de désulfuration, le fer directement réduit étant déchargé à l'extérieur du four à étages et les gaz désulfurés étant conduits dans la seconde zone où ils préchauffent le minerai de fer à une température de 600°C à 800°C.

2. Procédé selon la revendication 1, **caractérisé en ce que** les agents de désulfuration contiennent de la chaux, du calcaire et/ou de la magnésite.

3. Procédé selon l'une quelconque des revendications précédentes, **caractérisé en ce que** le minerai de fer est chargé dans la seconde zone et transféré progressivement dans la première zone.

4. Procédé selon la revendication 3, **caractérisé en ce que** des agents de désulfuration de même qu'un agent réducteur sont mélangés au minerai de fer dans la seconde zone.

5. Procédé selon la revendication 3, **caractérisé en ce qu'**une partie des agents de désulfuration de même qu'un matériau porteur de carbone sont mélangés au minerai de fer dans la seconde zone et la partie restante des agents de désulfuration est introduite dans la première zone.

6. Procédé selon la revendication 5, **caractérisé en ce qu'**on utilise des agents de désulfuration de granulométrie différente.

7. Procédé selon la revendication 5 ou 6, **caractérisé en ce que** l'on injecte des agents de désulfuration à gros grain dans la seconde zone et des agents de désulfuration en poudre dans la première zone.

8. Procédé selon l'une quelconque des revendications précédentes, **caractérisé en ce que** le minerai est séché dans la seconde zone du four à étages, puis chauffé à une température d'au moins 400°C, de préférence au moins 600°C, avant d'ajouter l'agent réducteur solide.

9. Procédé selon l'une quelconque des revendications précédentes, **caractérisé en ce que** des gaz contenant de l'oxygène sont injectés dans la première zone.

10. Procédé selon l'une quelconque des revendications précédentes, **caractérisé en ce que** l'on introduit des agents réducteurs solides et/ou gazeux sur les étages les plus bas du four à étages.

11. Procédé selon l'une quelconque des revendications précédentes, **caractérisé en ce que** l'on chauffe un ou plusieurs étages dans le four au moyen de brûleurs.

12. Procédé selon l'une quelconque des revendications précédentes, **caractérisé en ce que** le procédé est exécuté dans des conditions de surpression.
